Europäisches Patentamt

European Patent Office

Office européen des brevets

(19)

(11) Publication number: **0 279 099**
A2

# (12) EUROPEAN PATENT APPLICATION

(21) Application number: 87306849.8

(22) Date of filing: 03.08.87

(51) Int. Cl.⁴: **G05D 7/00**

(30) Priority: 02.08.86 GB 8618925
24.07.87 GB 8717549

(43) Date of publication of application:
24.08.88 Bulletin 88/34

(84) Designated Contracting States:
DE ES FR GB IT

(71) Applicant: Rathgeber KG
Industriestrasse
D-6349 Mittenaar-Bailersbach(DE)

(72) Inventor: Rathgeber, Frederich Hans
Hans Thoma Str. 3
D-6200 Wiesbaden(DE)

(74) Representative: Lewis, Samuel Hewitt et al
FORRESTER & BOEHMERT
Widenmayerstrasse 4/I
D-8000 München 22(DE)

(54) Control device and method of controlling flow.

(57) A flame-failure gas valve has a pressure chamber (15) which receives liquid when an end portion of a duct is heated by a flame. One boundary of the pressure chamber is defined by an elastomeric membrane (16) which is supported by an annular face of a body (10) of the valve. A central portion of the membrane is pushed along a passage (21) and motion is transmitted from this central portion to a valve (14) in the fuel-flow path. The structure may alternatively operate electrical contacts.

EP 0 279 099 A2

**"Control device and method of controlling flow"**

From one aspect, the present invention relates to a control device comprising a flexible diaphragm which is subjected at one of its faces to a pressure, the magnitude of which represents an input signal to the device, the movement of the diaphragm under the influence of the pressure being used to control operation of the device. The device may be a valve for controlling flow of a fluid. Alternatively, the device may be an electrical control device for controlling the flow of electrical current. Typically, control devices of the kind described are used to control the flow of fluids and the flow of electric current in accordance with the temperature at a selected position. To bring about changes in the pressure to which the diaphragm is subjected in accordance with temperature, there is provided in known devices a sealed duct containing a fluid, the duct communicating at one of its ends with a pressure chamber of the device and an opposite end portion of the duct being situated at the selected position.

According to the first aspect of the invention, there is provided a control device comprising a hollow body, a control element mounted for movement relative to the body, an elastomeric diaphragm and transmitting means for transmitting motion between the diaphragm and the control element, wherein there is in the body a pressure chamber and a passage leading from the pressure chamber at one boundary thereof, the diaphragm is disposed inside the body at said boundary of the pressure chamber, the transmitting means comprises a slug of resiliently deformable material disposed in the passage and contacting the diaphragm and wherein the slug engages a wall of the passage substantially continuously around the periphery of the passage.

An elastomeric diaphragm can stretch, without permanent damage, to a much greater degree than can diaphragms formed of metal, as provided in known devices of the kind described. This characteristic enables the diaphragm of a control device in accordance with the invention to be so arranged that the distance through which the diaphragm moves the slug when there is a predetermined change in the volume of liquid present in the pressure chamber of the control device is much greater than the movement of the known metal diaphragm when the volume of the associated pressure chamber is increased by the same amount. Thus, sufficient travel for operating the control device can be achieved with a relatively small flow of fluid into the pressure chamber and the volume of the closed end portion of the duct positioned at the temperature-sensing station can be much smaller than is the case in known control devices used for the same purpose. This provides the advantage of a very small thermal capacity for the closed end portion of the duct and the fluid contained therein, so that the delay between a substantial change in the temperature at the temperature-sensing station and operation of the control device is short.

According to a second aspect of the invention, there is provided a method of controlling flow through a flow-control device having a hollow body containing a diaphragm wherein the diaphragm is supported at one of its faces by a part of the body which defines a passage and by a resiliently deformable slug in the passage, an opposite face of the diaphragm is subjected to a pressure which is dependant upon the temperature at a temperature-sensing station, a first portion of the diaphragm is forced by the pressure along the passage, thereby displacing the slug along the passage, whilst a second portion of the diaphragm remains stationary relative to the body and wherein movement of the slug relative to the body is transmitted to a flow-control element of the device.

Examples of devices embodying the first aspect of the invention and which are used in methods in accordance with the second aspect of the invention will now be described, with reference to the accompanying drawings, wherein:-

FIGURE 1 shows diagrammatically a cross-section through a valve, components of the valve being shown in one half of the drawing in positions occupied when the valve is closed and being shown in the other half of the drawing in positions occupied when the valve is open; and

FIGURE 2 shows a diagrammatic representation of an electrical thermostat.

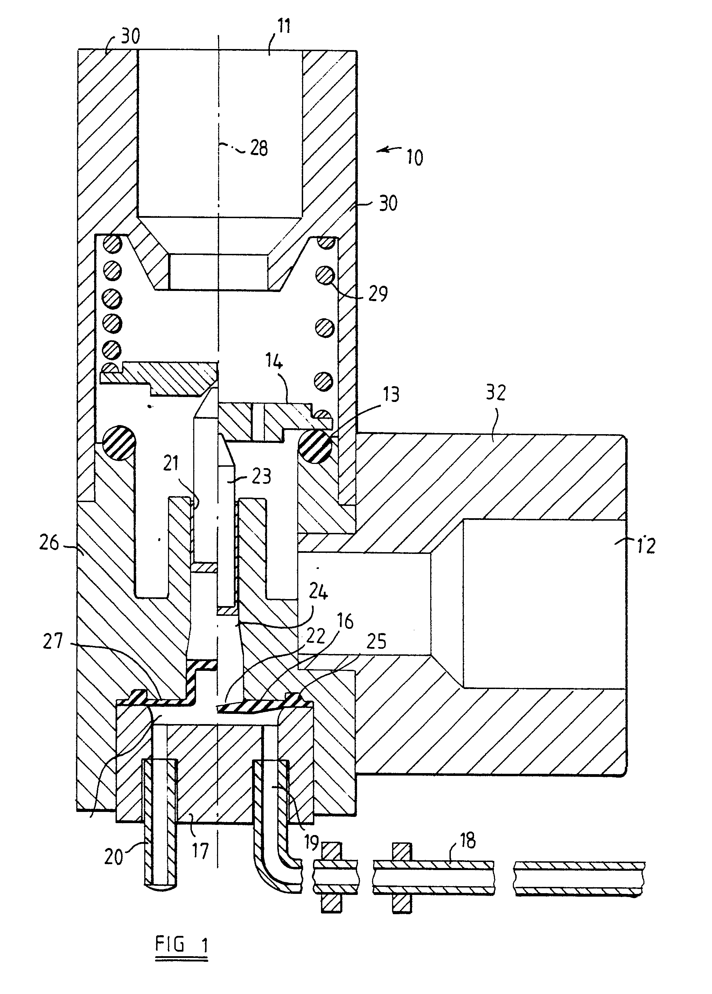

The device illustrated in Figure 1 of the drawing comprises a hollow body 10 defining a gas inlet 11, a gas outlet 12 and a flowpath extending through the body from the inlet to the outlet. A part of the flowpath is defined by a ring 13 which presents an annular valve seat and a valve element 14 is disposed in the body 10 for movement between the closed position shown in the right hand part of the drawing, in which the valve element engages the valve seat, and an open position shown in the left-hand part of the drawing, in which the valve element is spaced along the flowpath from the seat. The valve element preferably lies at the upsteam side of the valve seat.

There is defined in the body 10 a pressure chamber 15 which is divided from the gas flowpath. One boundary of the pressure chamber is defined by a diaphragm 16 and the remaining boundaries of the pressure chamber are defined by a closure plug 17 of the body 10. There communicates with the pressure chamber 15 a duct defined by a tube 18, one end portion of which is anchored in the plug 17. The opposite end portion of the tube 18 is permanently closed so that the pressure chamber and the duct together constitute a closed space. When the device is cold, this space is entirely occupied by a liquid 19. A further, closed tube 20 may communicate with the pressure chamber through the plug 17, to facilitate filling of the space with the liquid. The liquid may be mercury, as is used in known flame-responsive gas control valves or may an aqueous solution, as proposed in GB 2,099,128.

The closed end portion of the duct disclosed in GB 2,099,128 is a phial having an internal cross-sectional area which is much greater than the transverse cross-sectional area of an intermediate part of the duct. It will be noted that the closed end portion of the tube 18 of the present device has the same transverse cross-sectional area as does the remainder of the tube. If required, the closed end portion of the duct may be somewhat wider than is an intermediate part of the duct. However, the closed end portion of a device in accordance with the present invention can have a smaller volume, as compared with the closed end portion of the duct of known devices used for the same purpose.

The body 10 defines a rectilinear passage 21 extending from the pressure chamber 15 in a direction towards the valve element 14. The passage is narrower than the pressure chamber. In this passage, there is mounted means for transmitting motion to the valve element from a central portion 22 of the diaphragm 16. The transmitting means includes a pusher 23 which lies partly in the passage 21 and protrudes from the passage into engagement with the valve element. The pusher is formed of a relatively rigid material, for example a metal. There is interposed between the pusher and the central portion of the diaphragm a slug 24 formed of a material which is resiliently deformable, as compared with the material of which the pusher is formed. Both the pusher and the slug are substantially incompressible.

A peripheral portion 25 of the diaphragm 16 is gripped firmly between the closure plug 17 and a further component 26 of the body. This peripheral portion includes an annular rib which is received in a corresponding groove defined by the portion 26 of the body. Accordingly, the peripheral portion of the diaphragm is fixed with respect to the body. An intermediate, annular portion 27 of the diaphragm lies against a flat face of the body component 26 which is presented towards the pressure chamber 15. Accordingly, this intermediate portion of the diaphragm is supported against movement relative to the body in a direction towards the valve element 14 but is free to move across the supporting surface of the body towards a central axis 28 of the pressure chamber.

The central portion 22 of the diaphragm spans the mouth of the passage 21 and rests on an end face of the slug 24. As shown, this end face may be concave and the central portion of the diaphragm is preferably somewhat thicker than is the intermediate portion 27, the thickness having a maximum value at the axis 28. The diaphragm may be so formed that, when the central portion is substantially unstressed, the central portion protrudes somewhat into the passage 21. The area of the diaphragm exposed to the pressure chamber is a plurality of times greater than is the area of the diaphragm engaged with the slug.

The diaphragm 16 is formed of an elastomer and is therefore substantially incompressible but is able to stretch without being permanently deformed or damaged.

When a flame impinges on the closed end portion of the tube 18, the liquid therein boils and the pressure in the pipe 18 and in the pressure chamber 15 is increased considerably. The central portion 22 of the diaphragm is pushed into the passage 21, thereby increasing the volume of the pressure chamber 15. This expansion accommodates the increase in volume resulting from boiling of the liquid in the closed end portion of the pipe. The slug 24 is pushed along the passage 21 by the central portion of the diaphragm and the pusher 23 moves the valve element 14 away from the valve seat.

The slug 24 occupies the entire width of the passage 21 along a part of the length of the passage so that there is contact between the peripheral surface of the slug and the wall of the passage continuously around the periphery of the passage. It will be noted that this part of the passage includes a taper, the wider end of which is nearer to the pressure chamber 15. Accordingly, when the slug is pushed along the passage by the central portion 22 of the diaphragm, the slug is caused to contract radially. Since the slug is substantially incompressible, this causes longitudinal expansion of the slug. Furthermore, when the pressure in the pressure chamber 15 falls, the slug tends to expand radially and so move towards the wider end of the taper, returning the diaphragm to the position shown in the right-hand half of the drawing.

A spring 29 is provided for urging the valve element 14 to the closed position and urging the central portion of the diaphragm out of the passage 21. The spring is disposed inside the body 10 and acts between a shoulder on the body and the valve element 14. The strength of the spring is selected according to the nature of the liquid 19 and according to the required operating characteristics of the valve. For example, in a case where the liquid is an aqueous solution, the spring may be selected to prevent movement of the valve element 14 from the closed position until the temperature of the closed end portion of the tube 18 exceeds 200°C.

The thermal capacity of the closed end portion of the tube 18 and of the liquid therein is relatively low. Accordingly, once the flame is established, the temperature of that end portion of the tube rises rapidly and the valve is opened quickly. If the flame is extinguished, the closed end portion of the tube 18 cools rapidly and the valve is closed quickly by the spring 29. Typically, the delay between extinction of the flame and closing of the valve is no more than twenty seconds.

The body 10 comprises three components, additional to the closure plug 17. Each of these components is of tubular form and may be produced by machining bar or tube stock. A first component 30 of the body defines the gas inlet 11 and provides a seat against which the spring 29 bears. The second component 26 has an end portion which is a press fit in the component 30 at the end thereof remote from the gas inlet 11. The component 26 provides a seat for the ring 13 and defines the passage 21. At an end of the component 26 remote from the component 30, the component 26 defines a recess in which the closure plug 17 is received. This plug may be a press-fit in the recess.

The third tubular body component 32 includes one end portion defining the gas outlet 12 and a further end portion which is a press-fit in a bore formed in the side of the components 26. It will be noted that the body components are assembled together without the use of screws or other fasteners. Interfitting parts of the body components may be tapered to facilitate assembly and the establishment of leak-proof joints.

The control device illustrated in Figure 1 is suitable for use as a flame-failure safety valve in a boiler or other heating appliance in which a gaseous fuel is burned. The device may be arranged to cut-off the flow of gaseous fuel through the appliance in the event of a pilot light being extinguished.

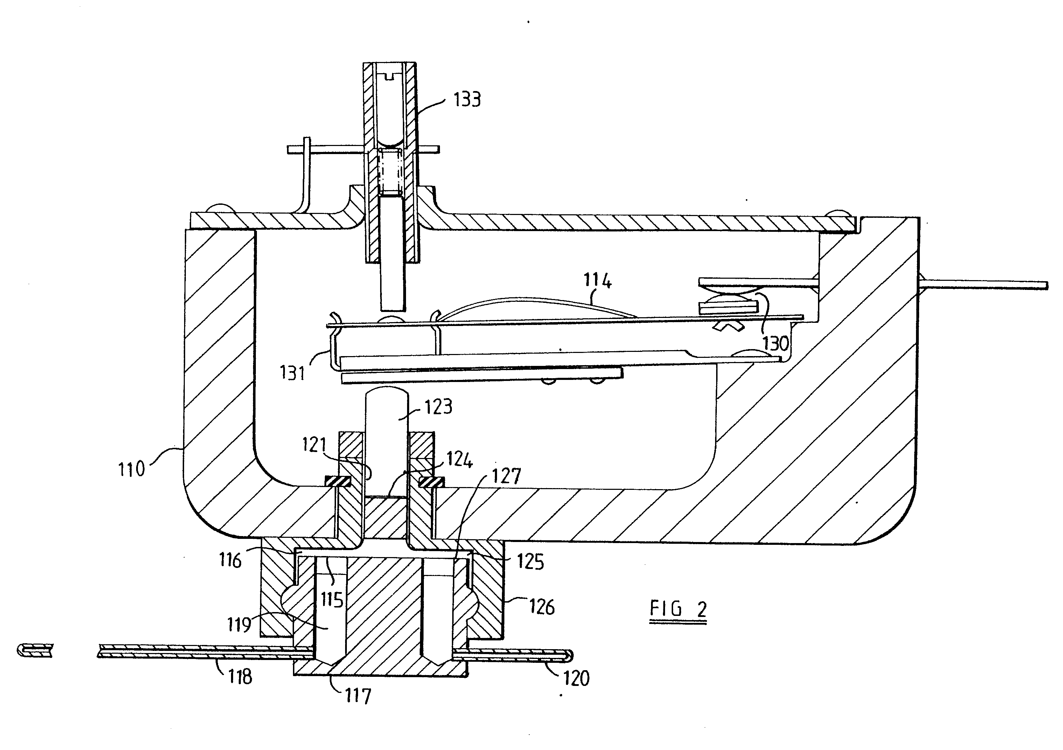

Certain parts of the control device illsutrated in Figure 2 correspond to parts of the device hereinbefore described with reference to Figure 1. In Figure 2, such corresponding parts are indicated by like reference numerals with the prefix 1 and the preceding description is deemed to apply, except for the differences hereinafter mentioned.

In place of the valve element 14, the device of Figure 2 comprises an electrical contact carrier 114 having a mid-portion which bears on the pusher 123 at end thereof remote from the slug 124 and which carries at one of its ends one contact of a set of electrical contacts 130. The contact carrier 114 is supported at its end remote from the contacts 130 by an adjustable support 131. A rotatable cam 132 is provided for adjusting the position of the support 131 relative to the body 110 and the cam is coupled with a rotary knob, a part of which is shown at 133.

The passage 121 may be of uniform width, as shown in Figure 2. Alternatively, that portion of the passage which contains the slug 124 may be tapered with the wider portion being adjacent to the diaphragm 116. The liquid 119 may be an amalgam of sodium and potassium which is liquid above a temperature of above approximately minus 13°C.

The control device illustrated in Figure 2 is suitable for use in controlling the flow of electrical current to the heating element of a hotplate. The contacts 130 are connected in the supply circuit of the heating element and the closed end portion of the duct 118 is mounted in proximity to the heating element or incorporated in structure through which heat is transferred from the heating element to a vessel which is to be heated. In a case where the heating element lies beneath a glass or ceramic hob plate, the closed end portion of the duct 118 may lie between the heating element and the hob plate. The control device may comprise further sets of electrical contacts which may, for example, be used for controlling energisation of an indicator lamp to indicate when the temperature of the closed end portion of the duct 118 is above a predetermined value, which may be different from the temperature at which the contacts 130 are operated.

The features disclosed in the foregoing description, or the accompanying drawings, expressed in their specific forms or in terms of a means for performing the disclosed function, or a method or process for attaining the disclosed result, as appropriate, may, separately or any combination of such features, be utilised for realising the invention in diverse forms thereof.

## Claims

1. A control device comprising a hollow body, a control element mounted for movement relative to the body, an elastomeric diaphragm and transmitting means for transmitting motion between the diaphragm and the control element, wherein there is the body a pressure chamber and a passage leading from the pressure chamber at one boundary thereof, the diaphragm is disposed inside the body at said boundary of the pressure chamber, the transmitting means comprises a slug of resiliently deformable material disposed in the passage and contacting the diaphragm and wherein the slug engages a wall of the passage substantially continuously around the periphery of the passage.

2. A device according to Claim 1 wherein the transmitting means further comprises a pusher which is rigid relative to the slug, is contained at least partly in said passage, bears on the slug, is arranged for sliding along the passage and is interposed between the control element and the slug.

3. A device according to Claim 1 or Claim 2 wherein said passage is narrower than is the pressure chamber.

4. A device according to Claim 1 or Claim 2 wherein the area of the diaphragm exposed to the contents of the pressure chamber is a plurality of times greater than the area of the interface between the diaphragm and the slug.

5. A device according to any preceding Claim wherein the body has an internal surface which faces in a direction from the passage towards the pressure chamber and surrounds the passage at an end thereof adjacent to the pressure chamber to define a mouth of the passage, a first portion of the diaphragm covers said internal surface, a second portion of the diaphragm spans said mouth and wherein the second portion of the diaphragm extends through the mouth into the passage, at least when the pressure in the pressure chambers exceeds a predetermined valuve.

6. A method of controlling flow through a flow-control device having a hollow body containing a diaphragm wherein the diaphragm is supported at one of its faces by a part of the body which defines a passage and by a resiliently deformable slug in the passage, an opposite face of the diaphragm is subjected to a pressure which is dependant upon the temperature at a temperature-sensing station, a first portion of the diaphragm is forced by the pressure along the passage, thereby displacing the slug along the passage, whilst a second portion of the diaphragm remains stationary relative to the body and wherein movement of the slug relative to the body is transmitted to a flow-control element of the device.

7. A gas valve substantially as herein described with reference to Figure 1 of the accompanying drawings.

8. An electrical thermostat substantially as herein described with reference to Figure 2 of the accompanying drawings.

9. Any novel feature of novel combination of features disclosed herein or in the accompanying drawing.

FIG 1

FIG 2